# FASCICULE DE BREVET EUROPEEN

(11) **EP 3 300 247 B1**
(45) Date de publication et mention de la délivrance du brevet: **05.08.2020**
(21) Numéro de dépôt: 17191890.7
(22) Date de dépôt: 19.09.2017
(51) Int. Cl.: H02P 29/60, B60L 50/15

(54) **PROCÉDÉ DE PILOTAGE D'UN MOTEUR ÉLECTRIQUE DE VÉHICULE HYBRIDE**
VERFAHREN ZUR STEUERUNG EINES ELEKTROMOTORS EINES HYBRIDFAHRZEUGS
METHOD FOR CONTROLLING AN ELECTRIC MOTOR OF A HYBRID VEHICLE

(30) Priorité: 21.09.2016 FR 1658869
(43) Date de publication de la demande: 28.03.2018
(73) Titulaire: RENAULT s.a.s., 92100 Boulogne-Billancourt (FR)
(72) Inventeur: ROGER, Pierre-Emmanuel, 75020 PARIS (FR); NEGRE, Edouard, 78180 MONTIGNY-LE-BRETONNEUX (FR); COTTE, Philippe, 92120 MONTROUGE (FR)

(56) Documents cités:
- EP-A2- 0 917 976
- FR-A1- 2 991 925
- FR-A1- 2 995 565
- US-A1- 2012 173 063
- US-A1- 2015 246 591

## Description

L'invention se rapporte au domaine de l'automobile et du management thermique. Plus précisément, elle concerne un procédé de pilotage d'un moteur électrique de véhicule électrique hybride.

Un véhicule hybride possède au moins deux sources d'énergie de nature différentes dans sa chaîne de traction. Les véhicules électriques hybrides comportent un moteur à combustion interne, un stockage de l'énergie et au moins un moteur électrique. Le stockage d'énergie est usuellement réalisé au moyen d'une batterie. Les moteurs électriques comprennent généralement une partie fixe appelée stator et une partie mobile appelée rotor. Le rotor est mis en mouvement par des forces magnétiques générées par la circulation de courants dans le stator et dans le rotor. Les architectures principales d'hybridation sont de type série ou parallèle. Dans le cas d'une architecture de type parallèle, le moteur à combustion interne est couplé mécaniquement au moteur électrique et le couplage se fait par addition de couple ou par addition de vitesse. Les algorithmes de pilotage du moteur électrique et du moteur à combustion interne, c'est-à-dire du groupe moto propulseur du véhicule électrique hybride, sont hébergés et implémentés dans un calculateur. Les procédés de pilotage du moteur électrique de traction de véhicules électriques hybrides commandent le moteur électrique dans les phases de traction ou de régénération en respectant les limites du moteur électrique et de l'onduleur. Le pilotage classique d'un moteur électrique consiste à réguler les courants de phase, c'est-à-dire les courants rotoriques et statoriques sous contrainte de la tension aux bornes du bus continu et/ou de la vitesse de rotation imposée ou du couple imposé par la liaison mécanique en architecture de type parallèle pour atteindre le point de fonctionnement permettant de réaliser le couple recherché tout en minimisant les pertes. Il s'agit donc d'un pilotage par optimisation de rendement. Parallèlement, les limitations liées à la batterie, notamment à son état de charge et à sa température sont également prises en compte et influent sur le procédé de commande de l'alimentation d'un moteur électrique, tel que divulgué dans le document FR1251283.

Cependant, les nouvelles normes de dépollution, telles que Euro 6c et les suivantes, requièrent de chauffer le moteur à combustion interne et ses systèmes de dépollution le plus rapidement possible pour les rendre actifs le plus tôt possible. Or le pilotage classique précédemment décrit ne permet qu'un chauffage assez lent du moteur à combustion interne et exige donc l'implantation de puissants organes de chauffage dans le circuit d'eau du moteur à combustion interne, tels que des thermoplongeurs.

Un des buts de l'invention est de remédier à au moins une partie des inconvénients de la technique antérieure en fournissant un procédé de pilotage d'un moteur électrique de véhicule électrique hybride comportant un mode non nominal de pilotage apte à accélérer le réchauffement du moteur à combustion interne. Le document US2012/0173063 divulgue un procédé de pilotage suivant le préambule de la revendication 1 et un système de pilotage suivant le préambule de la revendication 7.

A cette fin, l'invention propose un procédé de pilotage d'un moteur électrique, comportant un stator et un rotor, d'un véhicule électrique hybride, ledit véhicule comportant un calculateur, un moteur électrique et un moteur à combustion interne, ledit procédé étant caractérisé en ce qu'il comporte une étape d'activation d'un mode non nominal, ledit mode non nominal pilotant ledit moteur électrique dans une zone de faible rendement apte à réchauffer ledit fluide dudit premier circuit, ladite étape d'activation dudit mode non nominal étant conditionnée à une température dudit fluide dudit premier circuit inférieure à un seuil prédéterminé pendant une durée prédéterminée après le démarrage.

Grâce à l'invention, il est possible de réchauffer le moteur à combustion interne via l'augmentation de la charge du moteur à combustion interne pour entraîner mécaniquement le moteur électrique.

Selon une autre caractéristique avantageuse, ledit procédé comporte un premier circuit de thermorégulation du moteur à combustion interne et un deuxième circuit de thermorégulation du moteur électrique, le premier et le deuxième circuits comportant des moyens d'échange thermique. Cette caractéristique permet de chauffer plus rapidement le circuit d'eau du moteur électrique et indirectement le moteur à combustion interne ainsi que les organes de dépollution eux-mêmes.

Selon une caractéristique avantageuse, ledit procédé comporte :
- une étape d'acquisition et de lecture de variables thermiques
- une étape de réception de données incluant une vitesse de rotation rotor, une tension aux bornes du bus continu et une consigne de couple
- une étape d'activation du mode non nominal en fonction desdites variables thermiques et des données reçues à l'étape de réception
- une étape de détermination des courants de consigne du moteur électrique en fonction du mode de pilotage activé.
Cette caractéristique présente l'avantage de la facilité d'implémentation.

Selon une autre caractéristique avantageuse, ladite étape d'acquisition et de lecture des variables thermiques comprend l'acquisition et la lecture de la température dudit fluide dudit premier circuit et/ou des températures dudit stator et/ou dudit rotor. Cette caractéristique permet de recourir à des moyens connus de mesure ou d'estimation de températures.

Selon une autre caractéristique avantageuse, ladite activation du mode non nominal est interrompue si la température dudit fluide dudit premier circuit dépasse ledit seuil prédéterminé augmenté d'une hystérésis, ou si la température rotor dépasse un seuil de température rotor prédéterminé, ou si la température stator dépasse un seuil de température stator prédéterminé, ou si la différence de température entre le rotor et le stator dépasse un seuil d'écart de température prédéterminé. Cette caractéristique permet une implémentation simple et robuste des critères de sortie du mode non nominal garantissant un fonctionnement en toute sécurité des organes.

Selon une autre caractéristique avantageuse, ladite étape de détermination des courants de consigne du moteur électrique en mode non nominal utilise une cartographie des courants maximisant les pertes thermiques. L'avantage de cette caractéristique d'implémentation est notamment sa répétabilité et donc sa simplicité de validation, l'élaboration de la cartographie résultant de tests physiques et numériques réalisés en amont.

Selon une autre caractéristique avantageuse, ladite cartographie a pour entrées ladite consigne de couple, ladite tension aux bornes du bus continu et ladite vitesse de rotation, ce qui permet d'utiliser des données déjà disponibles sur les réseaux de communication du véhicule.

L'invention concerne également un système de pilotage d'un moteur électrique comportant un stator et un rotor, embarqué sur un véhicule électrique hybride, ledit véhicule comportant un calculateur, un moteur électrique et un moteur à combustion interne, ledit système étant caractérisé en ce qu'il comporte un moyen de pilotage en mode non nominal dudit moteur électrique dans une zone de faible rendement apte à réchauffer ledit fluide dudit premier circuit, ledit moyen de pilotage en mode non nominal étant activé sur une température dudit fluide dudit premier circuit inférieure à un seuil prédéterminé pendant une durée prédéterminée après le démarrage. Ce système présente des avantages analogues à ceux du procédé.

Selon une autre caractéristique avantageuse, ledit système comporte un premier circuit de thermorégulation du moteur à combustion interne et un deuxième circuit de thermorégulation du moteur électrique, lesdits circuits comportant des moyens d'échange thermique. Cette caractéristique présente l'avantage de réchauffer indirectement le moteur à combustion interne.

Selon une autre caractéristique avantageuse, ledit système comporte :
- un moyen de réception d'une vitesse de rotation rotor,
- un moyen de réception d'une tension aux bornes du bus continu,
- un moyen de réception d'une consigne de couple,
- un moyen d'acquisition et de lecture des variables thermiques,
- un moyen de pilotage en mode non nominal activé ayant pour entrées les sorties issues desdits moyens de réception et dudit moyen d'acquisition et de lecture,
- un moyen de détermination des courants de consigne du moteur électrique ayant pour entrée le mode de pilotage activé.
Cette caractéristique présente l'avantage d'utiliser des moyens déjà disponibles dans le véhicule. Grâce à l'invention, le respect des normes de dépollution peut ainsi être obtenu avec un thermoplongeur de performance et donc de dimension réduite par rapport à celui qui aurait été nécessaire sans ledit procédé, voire même sans organe additionnel de chauffage dans le circuit de thermorégulation du moteur à combustion interne.

D'autres caractéristiques et avantages apparaîtront à la lecture d'un mode de réalisation préféré non limitatif décrit en référence aux figures dans lesquelles :
- la figure 1 représente un exemple de schéma partiel du circuit électrique, mécanique et de communication apte à la mise en œuvre du procédé selon l'invention ;
- la figure 2 est un exemple de schéma d'un circuit d'eau de groupe moto propulseur conforme à l'invention ; et,
- la figure 3 est un organigramme des étapes du procédé selon l'invention.

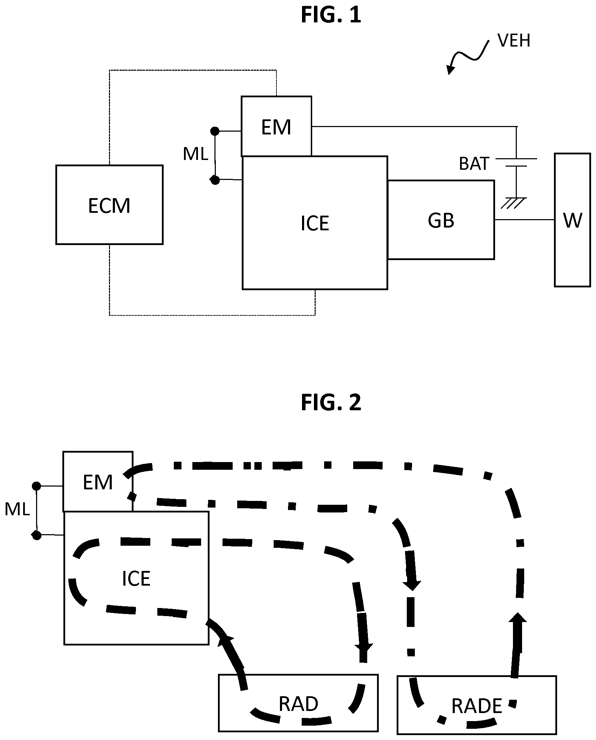

Selon un premier mode de réalisation de l'invention représenté à la **figure 1****,** le groupe moto propulseur d'un véhicule hybride électrique VEH comporte un moteur électrique EM, un moteur à combustion interne ICE et une batterie BAT. Le moteur électrique EM d'un véhicule hybride électrique VEH fonctionne soit comme générateur (recharge de la batterie en freinage par exemple) soit comme moteur (par apport de couple en phase d'assistance par couple électrique, dit « boost » en anglais ou de décollage en pente par exemple). La conception du groupe moto propulseur présente ici une architecture de type parallèle à couplage par addition de couple au moyen d'une liaison mécanique ML par courroie, poulie, ou engrenage. Ce mode de couplage additionne les couples du moteur électrique EM et du moteur à combustion interne ICE pour la traction ou pour recharger la batterie BAT. Le moteur à combustion interne est relié mécaniquement à une boîte de vitesse GB, elle-même reliée mécaniquement à une roue W. La batterie BAT est reliée électriquement au moteur électrique EM. L'architecture décrite ici correspond à un niveau d'hybridation douce, dit « mild hybrid » en anglais, de véhicule hybride électrique. L'hybridation douce consiste ici en l'adjonction d'un alterno-démarreur dimensionné pour pouvoir à la fois:
- alimenter le réseau de bord en 14V (volt)
- permettre la fonction marche/arrêt (« stop and start » en anglais) du moteur automatique lors des arrêts aux feux rouges
- récupérer et stocker de l'énergie au freinage et au levé de pied (décélération)
- répartir l'effort de couple entre le moteur thermique et l'alterno-démarreur pour optimiser la consommation énergétique du véhicule,
- et augmenter le brio, c'est-à-dire assurer un couple supplémentaire de façon ponctuelle (fonction « boost » ou assistance par couple électrique).
Cependant l'invention est aussi applicable à d'autres niveaux d'hybridation quel que soit le couplage par addition de vitesse ou de couple et quelle que soit l'architecture de type série ou parallèle. En pointillés sont représentés les flux de données de communication entre le calculateur ECM et le moteur électrique EM ainsi qu'entre le calculateur ECM et le moteur à combustion interne ICE. D'autres flux de communication existent, tel que le flux de données entre le calculateur ECM et la batterie BAT, mais ils ne sont pas représentés ici dans un objectif de clarté.

Sur la **figure 2** est représenté un schéma de circuit de thermorégulation du groupe moto propulseur précédemment décrit. Le fluide utilisé ici est de l'eau glycolée mais il pourrait par exemple aussi s'agir d'huile. Le circuit en pointillés tiret représente un premier circuit de thermorégulation par eau du moteur à combustion interne ICE refroidissant, au moyen d'un premier radiateur RAD, le moteur à combustion interne ICE. Le second circuit en pointillés tiret - point représente un deuxième circuit de thermorégulation par eau du moteur électrique EM refroidissant, au moyen d'un second radiateur RADE, le moteur électrique EM. Ici deux radiateurs distincts ont été représentés mais un unique radiateur partagé entre les deux circuits est également envisageable. Le sens de chaque circuit d'eau est indiqué au moyen d'une flèche. Le respect de certaines normes de dépollution exige une activation rapide des systèmes de dépollution dont l'efficacité et donc les plages de fonctionnement sont dépendantes de la température du moteur à combustion interne ICE. Or dans un fonctionnement avec un pilotage classique tel que décrit précédemment, le moteur à combustion interne ne chauffe pas suffisamment vite pour respecter ces normes de dépollution sans l'ajout d'un organe supplémentaire de chauffage dans le circuit d'eau du moteur à combustion interne. Ainsi, un thermoplongeur à résistance élevée est couramment ajouté sur la conduite de retour du fluide entre le radiateur RAD et le moteur à combustion interne ICE.

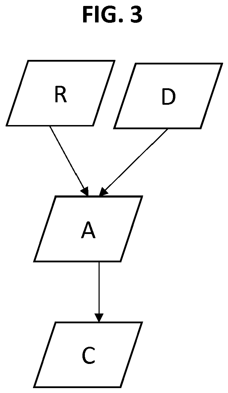

Sur la **figure 3** est représenté un organigramme des étapes du procédé de pilotage d'un moteur électrique EM de groupe moto propulseur d'un véhicule hybride électrique VEH selon l'invention. Classiquement le moteur électrique EM est piloté selon un mode nominal, qui optimise le rendement tout en respectant les limites de fonctionnement de différents organes impliqués dans la traction. Etant donné que ce mode nominal ne chauffe pas particulièrement rapidement les organes de dépollution, ces derniers mettent trop de temps à atteindre leur zone de fonctionnement pour respecter les nouvelles normes de dépollution, notamment en pays à froid dans la période suivant immédiatement le démarrage du véhicule VEH. Pour ne pas avoir à installer sur le circuit de thermorégulation du moteur à combustion interne ICE un dispositif supplémentaire de chauffage du fluide par thermoplongeur, ou pour au moins réduire la puissance de ce dispositif supplémentaire afin qu'il occupe un volume faible, l'invention décrit un procédé de pilotage du moteur électrique comportant un mode non nominal pilotant ledit moteur électrique dans une zone de faible rendement apte à réchauffer ledit fluide dudit premier circuit de thermorégulation. Pour décider de la transition du mode nominal vers ce mode non nominal, des données sont nécessaires.
Ainsi, une étape R de réception par le calculateur ECM d'une vitesse de rotation rotor, de la tension aux bornes du bus continu et d'une consigne de couple permettra d'établir le point de fonctionnement recherché. D'une part, la vitesse de rotation du rotor et la tension aux bornes du bus continu sont mesurées et envoyées au calculateur ECM, et d'autre part la consigne de couple est déterminée par le calculateur ECM en fonction de la demande client manifestée au moyen de l'enfoncement pédale, cependant cette consigne peut également être calculée par une autre unité de calcul et communiquée au calculateur ECM. Ces données sont classiquement, c'est-à-dire en mode nominal, également reçues et utilisées pour déterminer et réguler les courants de phase en vue d'atteindre un point de fonctionnement qui permet de réaliser le couple souhaité tout en minimisant les pertes.
Parallèlement ou consécutivement, une étape D d'acquisition et de lecture des variables thermiques permet d'obtenir la température dudit fluide dudit premier circuit et/ou des températures dudit stator et/ou dudit rotor. Ces données peuvent être mesurées au moyen de capteur, ou encore estimées par des algorithmes utilisant des données telles que le débit (de consigne ou mesuré) et d'autres températures mesurées.
A partir de ces données reçues et déterminées, l'étape A d'activation du mode non nominal va activer ou non le mode non nominal. L'activation du mode non nominal est conditionnée à une température dudit fluide dudit premier circuit inférieure à un seuil prédéterminé pendant une durée prédéterminée après le démarrage, c'est-à-dire que dans la période suivant immédiatement le démarrage du véhicule VEH d'environ 5 minutes, si la température dudit fluide dudit premier circuit est inférieure à un seuil de température déterminé, alors le mode non nominal est activé. Ce seuil vaut ici environ 50° mais un seuil variable est aussi envisageable. D'autres conditions limitent également l'activation du mode non nominal, ainsi le mode non nominal est interrompu si :
- la température dudit fluide dudit premier circuit dépasse ledit seuil prédéterminé augmenté d'une hystérésis de quelques degrés, ou
- si la température estimée du rotor dépasse un seuil de température rotor prédéterminé et calibré notamment de façon à garantir la fiabilité du rotor, ici de 200 degrés, ou
- si la température mesurée du stator dépasse un seuil de température stator prédéterminé et calibré notamment de façon à garantir la fiabilité du stator, ici de 155 degrés, ou
- si la différence de température entre le rotor et le stator dépasse un seuil d'écart de température prédéterminé de 80 degrés.
Une autre condition d'activation concerne l'état de charge de la batterie BAT afin d'interrompre le mode non nominal quand la batterie est complètement chargée.
Puis, une étape C de détermination des courants de consigne du moteur électrique en fonction du mode de pilotage activé est réalisée au moyen de cartographies. Quel que soit le mode de pilotage les cartographies utilisées sont élaborées en amont, notamment au moyen d'essais réels et/ou numériques. Les cartographies ont pour entrées les données reçues que sont la vitesse de rotation rotor, la tension aux bornes du bus continu et la consigne de couple, et pour sortie les courants de phase, c'est-à-dire les courants statoriques et rotoriques. Ces cartographies sont élaborées de manière à respecter les limitations en couple du moteur électrique EM en demeurant dans une enveloppe de couple, c'est à dire entre un couple maximum moteur et un couple maximum générateur qui sont fonction notamment de la vitesse de rotation du rotor. En mode nominal, des cartographies à optimisation de rendement sont utilisées, c'est-à-dire que ce sont des cartographies élaborées de manière à obtenir à leur sortie les courants statoriques et rotoriques qui permettent d'atteindre le couple souhaité avec le moins de pertes du moteur électrique EM. En mode non nominal, d'autres cartographies sont utilisées car il n'existe pas avec un moteur électrique un binôme unique courant de phase (pour un moteur synchrone)/glissement (pour un moteur asynchrone) pour la réalisation d'un couple. En effet, dans un moteur synchrone les pertes sont proportionnelles au courant rotorique et dans un moteur asynchrone les pertes rotor sont proportionnelles au glissement. Ainsi, dans le cas présent du moteur synchrone, pour un même couple de consigne les cartographies utilisées en mode non nominal maximisent les courants de phase pour augmenter au maximum les pertes stator et rotor afin de chauffer plus vite le moteur à combustion interne ICE et ses organes de dépollution via l'échauffement accéléré de l'eau du circuit de thermorégulation du moteur à combustion interne ICE. En effet, l'augmentation des courants de phase en mode non nominal par rapport au mode nominal augmente directement les pertes stator et rotor. Il convient de préciser qu'on peut également choisir de privilégier l'augmentation des pertes du stator, ou l'inverse. De plus, il résulte de l'augmentation de ces pertes une augmentation des calories transférées du moteur électrique EM vers son circuit de thermorégulation, quand bien même le moteur électrique EM a une forte inertie, ce qui est intéressant en cas de liaison thermique entre les deux circuits. En outre, dans ce mode non nominal le moteur électrique EM fonctionnant en mode générateur pour charger la batterie BAT, il agit comme un frein moteur et augmente la charge du moteur à combustion interne ICE. Cette augmentation de la charge du moteur à combustion interne ICE pour une même puissance électrique générée accélère le réchauffage de l'eau du circuit de thermorégulation du moteur à combustion interne ICE car les calories transférées de la chambre de combustion au circuit de thermorégulation du moteur à combustion interne ICE augmentent. Enfin, la puissance électrique générée étant identique et très faible dans les deux modes (puissance électrique nécessaire pour alimenter le réseau de bord 12V soit 3kW en pic), la batterie BAT se charge très lentement ce qui permet de rester dans le mode non nominal suffisamment longtemps sans atteindre l'état de charge maximal. Ce mode non nominal peut ainsi être maintenu après le démarrage suffisamment longtemps pour réchauffer suffisamment le moteur à combustion interne ICE de manière à pouvoir s'affranchir de l'ajout de thermoplongeur ou du moins permettre de le dimensionner à moindre coût et à moindre volume, ce qui permet un gain de volume et de poids tout en respectant les normes de dépollution. Ce procédé est ici hébergé et implémenté dans un calculateur ECM qui est maître vis-à-vis du moteur électrique ME esclave mais d'autres modes de réalisation sont envisageables. En variante d'autres modes de réalisation sont possible, notamment concernant l'ordre des étapes, par exemple les étapes D d'acquisition et R de réception peuvent être inversées. En outre, consécutivement à l'étape D d'acquisition et de lecture des variables thermiques, une étape de demande d'activation du mode non nominal peut être émise, la réponse à la demande pouvant être positive ou négative, c'est-à-dire activant ou non le mode non nominal conformément aux conditions d'activation du mode non nominal. Enfin, ce procédé peut aussi s'appliquer à tout dispositif ayant un moteur électrique EM thermo-régulé par un fluide et nécessitant pendant une phase d'utilisation de réchauffer un organe du dispositif.

## Revendications

1. Procédé de pilotage d'un moteur électrique (EM), comportant un stator et un rotor, d'un véhicule électrique hybride (VEH), ledit véhicule (VEH) comportant un calculateur (ECM), un moteur électrique (EM) et un moteur à combustion interne (ICE), ledit procédé comportant une étape (A) d'activation d'un mode non nominal, ledit mode non nominal pilotant ledit moteur électrique (EM) dans une zone de faible rendement apte à réchauffer un fluide d'un premier circuit, **caractérisé en ce que** ladite étape (A) d'activation dudit mode non nominal étant conditionnée à une température dudit fluide dudit premier circuit inférieure à un seuil prédéterminé pendant une durée prédéterminée après le démarrage.

2. Procédé de pilotage selon la revendication précédente, **caractérisé en ce qu'**il comporte :
- une étape (D) d'acquisition et de lecture de variables thermiques
- une étape (R) de réception de données incluant une vitesse de rotation rotor, une tension aux bornes d'un bus continu et une consigne de couple
- une étape (A) d'activation du mode non nominal en fonction desdites variables thermiques et des données reçues à l'étape (R) de réception
- une étape (C) de détermination des courants de consigne du moteur électrique (EM) en fonction du mode de pilotage activé.

3. Procédé de pilotage selon la revendication précédente, **caractérisé en ce que** ladite étape (D) d'acquisition et de lecture des variables thermiques comprend l'acquisition et la lecture de la température dudit fluide dudit premier circuit et/ou des températures dudit stator et/ou dudit rotor.

4. Procédé de pilotage selon l'une quelconque des revendications précédentes, **caractérisé en ce que** ladite activation du mode non nominal est interrompue si la température dudit fluide dudit premier circuit dépasse ledit seuil prédéterminé augmenté d'une hystérésis, ou si la température rotor dépasse un seuil de température rotor prédéterminé, ou si la température stator dépasse un seuil de température stator prédéterminé, ou si la différence de température entre le rotor et le stator dépasse un seuil d'écart de température prédéterminé.

5. Procédé de pilotage selon l'une quelconque des revendications 2 à 4, **caractérisé en ce que** ladite étape (C) de détermination des courants de consigne du moteur électrique (EM) en mode non nominal utilise une cartographie des courants maximisant les pertes thermiques.

6. Procédé de pilotage selon la revendication précédente, **caractérisé en ce que** ladite cartographie a pour entrées ladite consigne de couple, ladite tension aux bornes du bus continu et ladite vitesse de rotation.

7. Système de pilotage d'un moteur électrique (EM) comportant un stator et un rotor, embarqué sur un véhicule électrique hybride (VEH), ledit véhicule (VEH) comportant un calculateur (ECM), un moteur électrique (EM) et un moteur à combustion interne (ICE), ledit système comportant un moyen de pilotage en mode non nominal dudit moteur électrique (EM) dans une zone de faible rendement apte à réchauffer un fluide d'un premier circuit, **caractérisé en ce que** ledit moyen de pilotage en mode non nominal étant activé sur une température dudit fluide dudit premier circuit inférieure à un seuil prédéterminé pendant une durée prédéterminée après le démarrage.

8. Système de pilotage selon la revendication précédente, **caractérisé en ce qu'**il comporte un premier circuit de thermorégulation du moteur à combustion interne (ICE), un deuxième circuit de thermorégulation du moteur électrique (EM), lesdits circuits comportant des moyens d'échange thermique.

9. Système de pilotage selon l'une quelconque des revendications 7 à 8, **caractérisé en ce qu'**il comporte :
- un moyen de réception d'une vitesse de rotation rotor,
- un moyen de réception d'une tension aux bornes d'un bus continu,
- un moyen de réception d'une consigne de couple,
- un moyen d'acquisition et de lecture des variables thermiques,
- un moyen de pilotage en mode non nominal activé ayant pour entrées les sorties issues desdits moyens de réception et dudit moyen d'acquisition et de lecture,
- un moyen de détermination des courants de consigne du moteur électrique (EM) ayant pour entrée le mode de pilotage activé.

## Patentansprüche

1. Verfahren zur Steuerung eines einen Stator und einen Rotor umfassenden Elektromotors (EM) eines Hybridelektrofahrzeugs (VEH), wobei das Fahrzeug (VEH) einen Rechner (ECM), einen Elektromotor (EM) und einen Verbrennungsmotor (ICE) umfasst, wobei das Verfahren einen Schritt (A) der Aktivierung einer Nicht-Nennbetriebsart umfasst, wobei die Nicht-Nennbetriebsart den Elektromotor (EM) in einem Bereich eines niedrigen Wirkungsgrades steuert, der in der Lage ist, ein Fluid eines ersten Kreislaufs zu erwärmen,
**dadurch gekennzeichnet, dass** der Schritt (A) der Aktivierung der Nicht-Nennbetriebsart unter der Bedingung ausgeführt wird, dass eine Temperatur des Fluids des ersten Kreislaufs während einer vorbestimmten Dauer nach dem Starten niedriger als ein vorbestimmter Schwellenwert ist.

2. Verfahren zur Steuerung nach dem vorhergehenden Anspruch, **dadurch gekennzeichnet, dass** es umfasst:
- einen Schritt (D) der Erfassung und des Ablesens von thermischen Variablen,
- einen Schritt (R) des Empfangs von Daten, welche eine Rotordrehzahl, eine Spannung an den Anschlüssen eines Gleichstrombusses und einen Drehmomentsollwert beinhalten,
- einen Schritt (A) der Aktivierung der Nicht-Nennbetriebsart in Abhängigkeit von den thermischen Variablen und den im Schritt (R) des Empfangs empfangenen Daten,
- einen Schritt (C) der Bestimmung der Sollströme des Elektromotors (EM) in Abhängigkeit von der aktivierten Steuerungsbetriebsart.

3. Verfahren zur Steuerung nach dem vorhergehenden Anspruch, **dadurch gekennzeichnet, dass** der Schritt (D) der Erfassung und des Ablesens der thermischen Variablen die Erfassung und das Ablesen der Temperatur des Fluids des ersten Kreislaufs und/oder der Temperaturen des Stators und/oder des Rotors umfasst.

4. Verfahren zur Steuerung nach einem der vorhergehenden Ansprüche, **dadurch gekennzeichnet, dass** die Aktivierung der Nicht-Nennbetriebsart unterbrochen wird, falls die Temperatur des Fluids des ersten Kreislaufs den um eine Hysterese erhöhten vorbestimmten Schwellenwert überschreitet, oder falls die Rotortemperatur einen vorbestimmten Schwellenwert der Rotortemperatur überschreitet, oder falls die Statortemperatur einen vorbestimmten Schwellenwert der Statortemperatur überschreitet, oder falls die Temperaturdifferenz zwischen dem Rotor und dem Stator einen vorbestimmten Schwellenwert der Temperaturabweichung überschreitet.

5. Verfahren zur Steuerung nach einem der Ansprüche 2 bis 4, **dadurch gekennzeichnet, dass** der Schritt (C) der Bestimmung der Sollströme des Elektromotors (EM) in der Nicht-Nennbetriebsart ein Kennfeld der Ströme verwendet, welche die Wärmeverluste maximieren.

6. Verfahren zur Steuerung nach dem vorhergehenden Anspruch, **dadurch gekennzeichnet, dass** das Kennfeld den Drehmomentsollwert, die Spannung an den Anschlüssen eines Gleichstrombusses und die Drehzahl als Eingangsgrößen aufweist.

7. System zur Steuerung eines einen Stator und einen Rotor umfassenden Elektromotors (EM), der in ein Hybridelektrofahrzeug (VEH) eingebaut ist, wobei das Fahrzeug (VEH) einen Rechner (ECM), einen Elektromotor (EM) und einen Verbrennungsmotor (ICE) umfasst, wobei das System ein Mittel zur Steuerung des Elektromotors (EM) in einer Nicht-Nennbetriebsart in einem Bereich eines niedrigen Wirkungsgrades umfasst, der in der Lage ist, ein Fluid eines ersten Kreislaufs zu erwärmen,
**dadurch gekennzeichnet, dass** das Mittel zur Steuerung in der Nicht-Nennbetriebsart bei einer Temperatur des Fluids des ersten Kreislaufs aktiviert wird, die während einer vorbestimmten Dauer nach dem Starten niedriger als ein vorbestimmter Schwellenwert ist.

8. System zur Steuerung nach dem vorhergehenden Anspruch, **dadurch gekennzeichnet, dass** es einen ersten Temperierungskreislauf des Verbrennungsmotors (ICE) und einen zweiten Temperierungskreislauf des Elektromotors (EM) umfasst, wobei diese Kreisläufe Wärmeaustauschmittel umfassen.

9. System zur Steuerung nach einem der Ansprüche 7 bis 8, **dadurch gekennzeichnet, dass** es umfasst:
- ein Mittel zum Empfang einer Rotordrehzahl,
- ein Mittel zum Empfang einer Spannung an den Anschlüssen eines Gleichstrombusses,
- ein Mittel zum Empfang eines Drehmomentsollwertes,
- ein Mittel zur Erfassung und zum Ablesen der thermischen Variablen,
- ein Mittel zur Steuerung in der aktivierten Nicht-Nennbetriebsart, dessen Eingangsgrößen die von den Mitteln zum Empfang und dem Mittel zur Erfassung und zum Ablesen ausgegebenen Ausgangsgrößen sind,
- ein Mittel zur Bestimmung der Sollströme des Elektromotors (EM), dessen Eingangsgröße die aktivierte Steuerungsbetriebsart ist.

## Claims

1. Method for controlling an electric motor (EM), comprising a stator and a rotor, of a hybrid electric vehicle (VEH), said vehicle (VEH) comprising a computer (ECM), an electric motor (EM) and an internal combustion engine (ICE), said method comprising a step (A) of activating a non-nominal mode, said non-nominal mode controlling said electric motor (EM) to a region of low efficiency able to heat a fluid of a first circuit, **characterized in that** said step (A) of activating said non-nominal mode requires a temperature of said fluid of said first circuit to be below a pre-set threshold for a pre-set duration after start-up.

2. Control method according to the preceding claim, **characterized in that** it comprises:
- a step (D) of acquiring and reading thermal variables
- a step (R) of receiving data including a rotor rotation speed, a voltage across the terminals of a DC bus and a torque setpoint
- a step (A) of activating the non-nominal mode depending on said thermal variables and the data received in the receiving step (R)
- a step (C) of determining setpoint currents for the electric motor (EM) depending on the activated control mode.

3. Control method according to the preceding claim, **characterized in that** said step (D) of acquiring and reading thermal variables comprises acquiring and reading the temperature of said fluid of said first circuit and/or temperatures of said stator and/or of said rotor.

4. Control method according to any one of the preceding claims, **characterized in that** said activation of the non-nominal mode is interrupted if the temperature of said fluid of said first circuit exceeds said pre-set threshold increased by a hysteresis, or if the rotor temperature exceeds a pre-set rotor-temperature threshold, or if the stator temperature exceeds a pre-set stator-temperature threshold, or if the temperature difference between the rotor and the stator exceeds a pre-set temperature-difference threshold.

5. Control method according to any one of Claims 2 to 4, **characterized in that** said step (C) of determining setpoint currents for the electric motor (EM) in non-nominal mode uses a map of currents maximizing heat losses.

6. Control method according to the preceding claim, **characterized in that** said map has as inputs said torque setpoint, said voltage across the terminals of the DC bus and said rotation speed.

7. System for controlling an electric motor (EM) comprising a stator and a rotor, said motor being located on board a hybrid electric vehicle (VEH), said vehicle (VEH) comprising a computer (ECM), an electric motor (EM) and an internal combustion engine (ICE), said system comprising a means for controlling in a non-nominal mode said electric motor (EM) to a region of low efficiency able to heat a fluid of a first circuit, **characterized in that** said means for controlling in a non-nominal mode is activated when a temperature of said fluid of said first circuit is below a pre-set threshold for a pre-set duration after start-up.

8. Control system according to the preceding claim, **characterized in that** it comprises a first circuit for regulating the temperature of the internal combustion engine (ICE) and a second circuit for regulating the temperature of the electric motor (EM), said circuits comprising heat-exchanging means.

9. Control system according to either one of Claims 7 and 8, **characterized in that** it comprises:
- a means for receiving a rotor rotation speed,
- a means for receiving a voltage across the terminals of a DC bus,
- a means for receiving a torque setpoint,
- a means for acquiring and reading thermal variables,
- a means for controlling in activated non-nominal mode having as inputs the outputs of said receiving means and of said acquiring and reading means,
- a means for determining setpoint currents of the electric motor (EM) having as input the activated control mode.
